(19) Europäisches Patentamt

European Patent Office

Office européen des brevets

(11) **EP 0 793 158 B1**

(12) **EUROPÄISCHE PATENTSCHRIFT**

(45) Veröffentlichungstag und Bekanntmachung des Hinweises auf die Patenterteilung:
**02.01.2002 Patentblatt 2002/01**

(51) Int Cl.$^7$: **G05D 27/02**

(21) Anmeldenummer: **97103152.1**

(22) Anmeldetag: **26.02.1997**

(54) **Verfahren und Vorrichtung zur Steuerung einer Abblendeinrichtung**

Method and device for controlling a blind

Dispositif et méthode pour contrôler une jalousie

(84) Benannte Vertragsstaaten:
**AT BE CH DE ES FI FR GB IT LI NL SE**

(30) Priorität: **29.02.1996 DE 29609127 U**
**03.06.1996 DE 19622253**

(43) Veröffentlichungstag der Anmeldung:
**03.09.1997 Patentblatt 1997/36**

(73) Patentinhaber: **Luxmate Controls GmbH**
**6850 Dornbirn (AT)**

(72) Erfinder:
• **Werner, Walter Dr.**
**6850 Dornbirn (AT)**
• **Sejkora, Günther Dr.**
**6867 Schwarzenberg (AT)**
• **Geiginger, Joachim Dipl.-Ing.**
**6845 Hohenems (AT)**
• **Bauer, Manuel Dipl.-Phys.**
**1438 Mathod (CH)**
• **Faist, André Dr.**
**1111 Tolochenaz (CH)**

• **Morel, Nicolas Dr.**
**1024 Ecublens (CH)**
• **Scartezzini, Jean-Louis Dr.**
**1006 Lausanne (CH)**
• **Hegetschweiler, Walter**
**6312 Steinhausen (CH)**

(74) Vertreter: **Schmidt-Evers, Jürgen, Dipl.-Ing.**
**Patentanwälte Mitscherlich & Partner,**
**Sonnenstrasse 33**
**80331 München (DE)**

(56) Entgegenhaltungen:
EP-A- 0 405 149          EP-A- 0 521 818
EP-A- 0 659 035          WO-A-86/04382
DE-A- 2 500 647          DE-U- 9 412 900

• **PROCEEDINGS OF THE CONFERENCE ON FUZZY SYSTEMS, ORLANDO, JUNE 26 - 29, 1994, Bd. 2, 26.Juni 1994, INSTITUTE OF ELECTRICAL AND ELECTRONICS ENGINEERS, Seiten 1197-1202, XP000518392 LEE S -G ET AL: "A FUZZY VENETIAN BLIND CONTROLLER - HARDWARE IMPLEMENTATION"**

**Beschreibung**

Die vorliegende Erfindung betrifft ein Verfahren und eine Vorrichtung zur Steuerung einer Abblendeinrichtung, die zum Abblenden eines einen Raum von außen beleuchtenden Außenlichts dient. Insbesondere betrifft die Erfindung ein Verfahren und eine Vorrichtung zur Steuerung von Jalousien oder Storen eines Raumes.

Jalousien oder Storen dienen zum einen als Blendschutz bei direkter Sonneneinstrahlung oder allgemein bei starker Außenbeleuchtung, so daß auch in der Nähe von Fenstern ein blendfreies Arbeiten möglich ist. Des weiteren verhindern Jalousien bei direkter Sonneneinstrahlung eine zu starke Aufwärmung des Raums.

Aufgrund der ansteigenden Verbreitung von Bildschirmarbeitsplätzen ist insbesondere der Aspekt des blendfreien Arbeitens von großer Bedeutung. Daher werden bekannterweise häufig die Jalousien eines Raums bereits bei einem ersten Auftreten von Blendung geschlossen. Die Jalousien bleiben dann in der Regel den ganzen Tag geschlossen, so daß den ganzen Tag für die Beleuchtung des Raums Kunstlicht benötigt wird. Es wurde daher ein in der EP 94 119 424 beschriebenes Verfahren zum Einstellen des Summenlichts in einem Raum sowie eine Vorrichtung zur Durchführung dieses Verfahrens entwickelt, womit der Energieverbrauch minimiert werden kann. Gemäß der EP 94 119 424 wird nicht nur die Innenbeleuchtung des Raumes tageslichtabhängig gedimmt, sondern auch eine Abblendeinrichtung des Raumes, wie z.B. eine Jalousie, wird abhängig von dem Tageslicht gemäß vordefinierter Steuerfunktionen angesteuert, so daß das Tageslicht durch die Abblendeinrichtung automatisch gedimmt wird. Es wurde somit eine Jalousiesteuerung realisiert, die einerseits eine umfangreiche Nutzung des Tageslichts erlaubt und andererseits für ein stets blendfreies Arbeiten sorgt.

Diese Jalousiesteuerung nimmt hingegen auf klimatechnische Aspekte keine Rücksicht. Durch Fenster und Jalousien erfolgt jedoch ein beträchtlicher Temperaturaustausch mit der Umwelt, der durch die Stellung der Jalousien innerhalb bestimmter Grenzen gesteuert werden kann. So kann durch Schließen der Jalousien z.B. ein Aufwärmen des Raums durch Sonneneintralung oder ein Abkühlen in der Nacht verringert werden. Würde nun eine Jalousiesteuerung allein anhand dieser Aspekte ausgelegt werden, könnte zwar der Energieverbrauch für die Beheizung/Kühlung des Raums entsprechend verringert bzw. die Behaglichkeit für eine in dem Raum anwesende Person vergrößert werden. Andererseits kann eine derartige Jalousiesteuerung nicht immer ein blendfreies Arbeiten in dem Raum gewährleisten.

Ein weitere Einrichtung zum Steuern einer Abblendeinrichtung ist in dem Artikel "A Fuzzy Venetion Blind Controller - Hardware Implementation" beschrieben. Diese Steuereinrichtung regelt dabei die Stellung der Abblendeinrichtung gemäß den Regeln der Fuzzy-Logik, um den Wärmetransfer bei Mehrscheibenfenstern zu optimieren und damit die Heizungskosten oder Energiekosten für Klimaanlagen beispielsweise in Bürogebäuden zu reduzieren. Auch diese Steuerung berücksichtigt jedoch nicht die lichttechnischen Bedürfnisse einer sich in dem Raum aufhaltenden oder arbeitenden Person.

Schließlich ist aus der US 5,237,169 eine Steuereinrichtung bekannt, die sowohl die Stellung einer Abblendeinrichtung als auch die Beleuchtung des Raumes regelt. Dabei werden die Lichtmenge, die Lichtintensität und die Temperatur des Raumes berücksichtigt, wobei es möglich ist, eine bestimmte Hierarchie anzugeben, nach der eine Entscheidung über die auszuführende Steuerfunktion getroffen wird. Beispielsweise kann die Steuerung so erfolgen, daß die Innenbeleuchtung lediglich in den Fällen, in denen dies unumgänglich ist, eingeschaltet wird, um Elektrizitätskosten zu sparen. Auch hier sollen in erster Linie Energiekosten gespart werden, die lichttechnischen Bedürfnisse spielen eine untergeordnete Rolle.

Der Erfindung liegt daher die Aufgabe zugrunde, ein Verfahren und eine Vorrichtung zur Steuerung einer Abblendeinrichtung zum Abblenden eines einen Raum von außen beleuchtenden Außenlichts anzugeben, wobei der der Energieverbrauch für eine Beheizung bzw. Kühlung des Raums bei ausreichender Behaglichkeit in dem Raum minimiert ist, d.h. wobei für die Steuerung der Abblendeinrichtung auch auf klimatechnische Aspekte Rücksicht genommen wird.

Diese Aufgabe wird bezüglich des Verfahrens durch die Merkmale des Patentanspruchs 1 und bezüglich der Vorrichtung durch die Merkmale des Patentanspruchs 12 gelöst.

Erfindungsgemäß wird zunächst eine erste optimale Einstellposition für die Abblendeinrichtung ausschließlich anhand erster Parameter ermittelt. Diese ersten Parameter können von einer Bedienperson vorgegeben sein und beispielsweise vordefinierten Positionen für die Abblendeinrichtung entsprechen. Insbesondere können diese ersten Parameter aber auch lichttechnische Parameter, wie z.B. die Bestrahlungsstärke des Außenlichts, der Sonnenstand bzw. der Bestrahlungswinkel, die Orientierung des Fensters gegenüber der Sonne usw., sein. Ebenso wird eine zweite optimale Einstellposition für die Abblendeinrichtung auschließlich anhand klimatechnischer Aspekte, wie z. B. der Innentemperatur, der Außentemperatur, der Bestrahlungsstärke des Außenlichts, der Heiz- oder Kühlleistung in dem Raum oder bestimmter Wärmekoeffizienten der Abblendeinrichtung oder des Fensters, ermittelt. Es wird also zum einen die aus der Sicht der Bedienperson oder aus lichttechnischer Sicht optimale Position und zum anderen die aus klimatechnischer Sicht optimale Position der Abblendeinrichtung, z.B. einer Jalousie, ermittelt. Dabei ist der Begriff "Position" abhängig von dem Typ der Abblendeinrichtung zu interpretieren. Bei Stoffstoren ist z.B. unter "Position" die Position der Storenunterkante in Bezug auf das Fenster zu verstehen, bei Lamellenstoren hingegen die Position der Storenunterkante und der Anstellwinkel der Lamellen.

Aus den beiden ermittelten Einstellpositionen wird abschließend die hinsichtlich bestimmter Entscheidungsparamter bzw. Entscheidungsregeln zu bevorzugende Position ausgewählt und ensprechend die Abblendeinrichtung angesteuert. Ebenso kann jedoch auch eine Kompromißposition bestimmt werden, die den beiden ermittelten "optimalen" Einstellpositionen bestmöglich gerecht wird. Dabei wird die Entscheidung stets so getroffen, daß einerseits der Benutzerkomfort bezüglich Blendung und Innentemperatur in dem Raum optimal ist und andererseits der Energieaufwand für die Beleuchtung und Beheizung/Kühlung des Raums minimiert ist.

Gemäß einem ersten Ausführungsbeispiel der Erfindung werden die "optimalen" Einstellpositionen jeweils gewichtet. Die Gewichtung für jede ermittelte Einstellposition ist dabei umso höher, je dringender die entsprechende Position eingestellt werden soll. Bei der endgültigen Entscheidung über die tatsächliche Soll-Einstellposition für die Abblendeinrichtung werden die jeweiligen aus der Sicht der Bedienperson oder aus der lichttechnischen bzw. klimatechnischer Sicht optimalen Einstellpositionen verglichen und es wird versucht, eine Kompromißlösung zu finden, die den beiden Wunschpositionen gerecht wird. Kann keine Kompromißlösung gefunden werden, wird diejenige Position als endgültige Einstell-Sollposition für die Abblendeinrichtung gewählt, die die größere Gewichtung aufweist.

Gemäß einem zweiten Ausführungsbeispiel wird als die endgültige Einstell-Sollposition für die Abblendeinrichtung stets die aus klimatechnischer Sicht optimale Position gewählt, wenn sich in dem Raum keine Person befindet. Bei Anwesenheit einer Person wird stets die aus lichttechnischer Sicht oder aus der Sicht der Bedienperson optimale Einstellposition ausgewählt, da dadurch stets ein blendfreies Arbeiten in dem Raum möglich ist bzw. dem Wunsch der in dem Raum anwesenden Person bestmöglich entsprochen werden kann. Kann in dem Raum unabhängig von der Position der Abblendeinrichtung keine Blendung auftreten (z.B. bei stark bedecktem Himmel), so wird diejenige Einstellposition ermittelt, die den geringsten Energieaufwand für die Innenbeleuchtung und Beheizung/Kühlung des Raums erfordert. Ebenso können auch bei diesem Ausführungsbeispiel die ermittelten Einstellpositionen gewichtet werden, wobei bei Anwesenheit einer Person in dem Raum die höhergewichtete Einstellposition ausgewählt wird.

Vorteilhafterweise kann mit der erfindungsgemäßen Steuerung auch eine Steuerschaltung zum Einstellen des den Raum beleuchtenden Kunstlichts verbunden sein, um die Kunstlichtbeleuchtung abhängig von der Stellung der Abblendeinrichtung zu steuern. Ebenso kann die Steuerung mit einer Heizungs-/Lüftungs- und Klimaregeleinheit verbunden sein, um die Stellung der Abblendeinrichtung in die Temperaturregelung des Raums einzubeziehen oder Soll-Temperaturwerte vorgeben zu können.

Gemäß einer bevorzugten Ausführungsform der Erfindung erfolgt zumindest die Bestimmung der aus klimatechnischer Sicht optimalen Einstellposition nach den Regeln der Fuzzy-Logik. Wird auch die aus der Sicht der Bedienperson bzw. die aus lichttechnischer Sicht optimale Einstellposition sowie die endgültige Einstell-Sollposition für die Abblendeinrichtung nach den Regeln der Fuzzy-Logik ermittelt, ist eine weiter verbesserte und sehr genaue sowie an den tatsächlichen Gegebenheiten und den Bedürfnissen der Personen in dem Raum orientierte Steuerung der Abblendeinrichtung möglich.

Die Unteransprüche geben weitere vorteilhafte Ausgestaltungen der Erfindung an.

Die Erfindung wird nachfolgend anhand eines bevorzugten Ausführungsbeispiels unter Bezugnahme auf die Zeichnung beschrieben. Es zeigen:

Fig. 1 ein bevorzugtes Ausführungsbeispiel der erfindungsgemäßen Vorrichtung,

Fig. 2a, 2b und 2c Entscheidungsregeln für eine beispielhafte Realisierung des ersten Ausführungsbeispiels der Erfindung mit Hilfe der Fuzzy-Logik,

Fig. 2d eine Darstellung zur Ermittlung der Gewichtung bei einem spontanen Eingriff einer Bedienperson in die Steuerung der Abblendeinrichtung gemäß dem ersten Ausführungsbeispiel des erfindungsgemäßen Verfahrens,

Fig. 3a, 3b und 3c Entscheidungsregeln für eine beispielhafte Realisierung des zweiten Ausführungsbeispiels des erfindungsgemäßen Verfahrens mit Hilfe der Fuzzy-Logik.

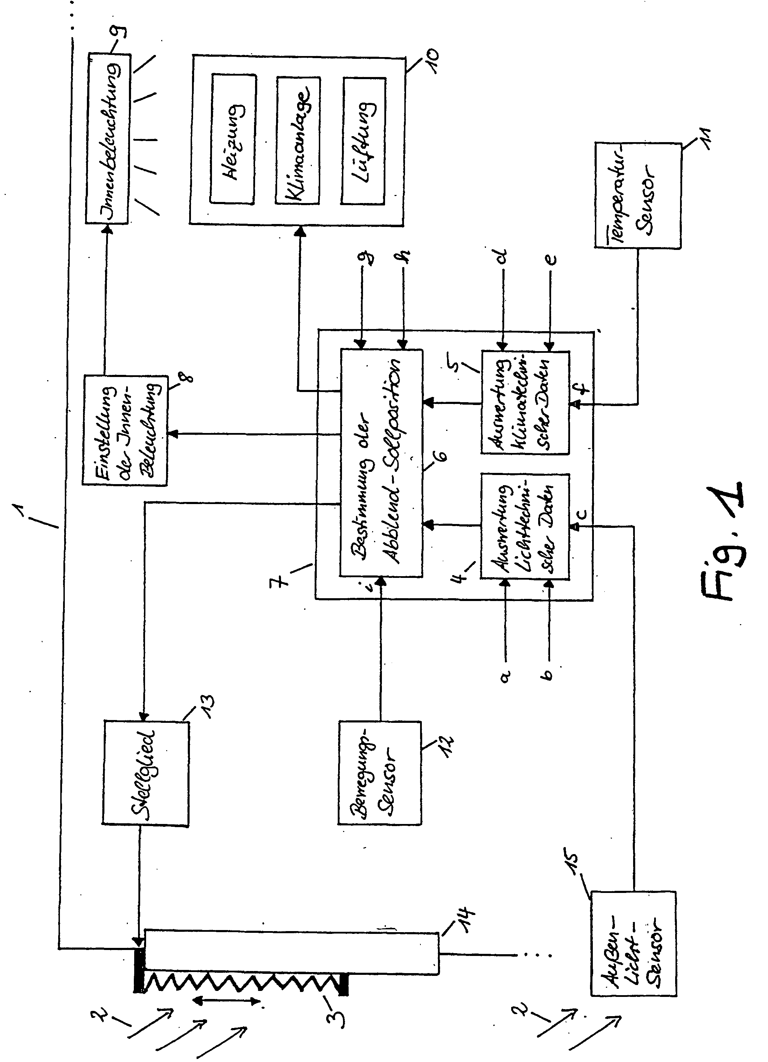

Fig. 1 zeigt einen von Außenlicht 2 durch ein Fenster 14 beleuchteten Raum 1. Zur weiteren Beleuchtung ist eine Kunstlichtquelle 9 in dem Raum 1 vorgesehen. Zum Dimmen des einfallenden Außenlicht dient eine Abblendeinrichtung 3, wie z.B. eine Jalousie. Die Position der Jalousie wird durch ein Stellglied 13 eingestellt, welches von einer Steuerschaltung 7 angesteuert wird.

Die Steuerschaltung 7 umfaßt drei Einrichtungen 4, 5 und 6 zur Bestimmung der Einstell-Sollposition der Jalousie 3.

Die Einrichtung 4 ermittelt die aus lichttechnischer Sicht optimale Position der Jalousie 3, so daß in dem Raum 1 bei bestmöglicher Nutzung des Außenlichts 2 stets ein blendfreies Arbeiten möglich ist. Zu diesem Zweck werden der Einrichtung 4 verschiedene lichttechnische Parameter a, b, c, wie z.B. die Bestrahlungsstärke des Außenlichts 2, der Stand der Sonne oder die Orientierung des Fensters 14 gegenüber der Sonne, zugeführt. Die Bestrahlungsstärke des Außenlichts 2 wird über einen .Außenlichtsensor 15 erfaßt.

Die Einrichtung 5 ermittelt die aus klimatechnischer Sicht optimale Position der Jalousie 3, so daß in dem Raum 1 der Energieeinsatz für die Erzielung einer bestimmten Temperatur minimiert wird. Zu diesem Zweck werden der Einrichtung 5 verschiedene klimatechnische Paramter d, e, f, wie z.B. die Innen- und Außentemperatur, die Bestrahlungsstärke des Außenlichts oder bestimmte Wärmekoeffizienten des Fensters 14 oder der Jalousie 3, zugeführt. Die Innen- und/oder Außentemperatur wird über einen Temperatursensor 11 erfaßt.

Die Einrichtung 6 bestimmt die endgültige Einstell-Sollposition für die Jalousie 3 abhängig von den durch die Einrichtungen 4 bzw. 5 ermittelten "optimalen" Einstellpositionen aus lichttechnischer bzw. klimatechnischer Sicht. Die Einrichtung 6 entscheidet, welche der beiden "optimalen" Einstellpositionen ausgewählt wird oder bestimmt eine Kompromißposition für die Ansteuerung der Jalousie 3. Diese Entscheidung wird stets so getroffen, daß einerseits in dem Raum 1 der Benutzerkomfort hinsichtlich Raumtemperatur und blendfreiem Arbeiten optimal ist und andererseits der Energieverbrauch für die künstliche Beleuchtung und Beheizung/ Kühlung des Raums 1 minimal ist. Die Bestimmung der endgültigen Einstell-Sollposition für die Jalousie 3 durch die Einrichtung 6 kann nach den folgenden Ausführungsbeispielen erfolgen:

Vorteilhafterweise kann eine Bedienperson in den Steuerablauf der in Fig. 1 gezeigten Vorrichtung eingreifen, um ihrerseits gewünschte Soll-Einstellpositionen einstellen zu können. Zu diesem Zweck können vordefinierte Einstellpositionen in der Steuerschaltung 7 gespeichert sein oder die Bedienperson kann extern von Hand eine gewünschte Einstell-Sollposition vorgeben. Um diese von einer Bedienperson vorgegebenen Einstellpositionen auszuwerten, kann neben den Einrichtungen 4 und 5 eine weitere Auswerteeinrichtung zur Auswertung der Bedienpersonendaten vorgesehen sein. Ebenso kann die Auswertung dieser Bedienpersonendaten beispielsweise durch die Einrichtung 4 durchgeführt werden, die dann anstelle oder zusätzlich zu den lichttechnischen Daten die Bedienpersonendaten auswertet.

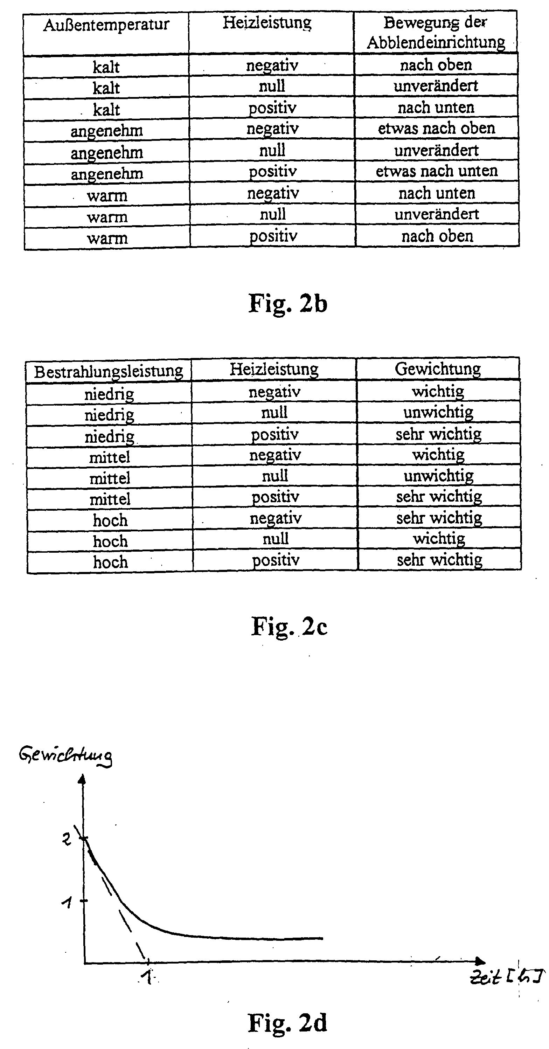

Gemäß einem ersten Ausführungsbeispiel geben die Einrichtungen 4 und 5 neben der aus Benutzersicht oder lichttechnischer bzw. klimatechnischer Sicht optimalen Einstellposition auch eine Gewichtung für die entsprechende Einstellposition an. Diese Gewichtung ist umso höher, je dringender die jeweilige Einstellposition eingestellt werden soll. So liefert z.B. die Einrichtung 5 bei einem warmen Sommertag mit direkter Sonneneinstrahlung für die Jalousie die Einstellposition "geschlossen" mit einer sehr hohen Gewichtung, da aus klimatechnischer Sicht das Bedürfnis nach Schließen der Jalousie 3 sehr stark ist. Für den Fall, daß durch eine Bedienperson Einstellpositionenen vorgegeben werden, sind zwei Fälle zu unterscheiden. Sind vordefinierte Einstellpositionen in der Steuerschaltung 7 vorgespeichert, so kann jede Einstellposition mit einer gespeicherten Gewichtung versehen sein, die mit der gewünschten Einstellposition ausgelesen wird. Greift dagegen eine Bedienperson spontan in den Steuerablauf der in Fig. 1 gezeigten Vorrichtung ein, so wird die Gewichtung gemäß der in Fig. 2d dargestellten zeitabhängigen Gewichtungsfunktion ermittelt, wobei die Gewichtung mit zunehmender Zeit abnimmt. D.h. der Bedienperson wird mit zunehmend verspätetem Eingreifen eine niedrigere Wichtigkeit ihrer gewünschten Einstellposition unterstellt. Es ist jedoch auch denkbar, daß die Bedienperson die Gewichtung für ihre gewünschten Einstellpositionen von Hand vorgeben kann. Ebenso ist denkbar, daß eine Bedienperson die Gewichtung für die aus lichttechnischer bzw. klimatechnischer Sicht optimalen Einstellposition vorgeben kann.

Die Einrichtung 6 vergleicht die von den Einrichtungen 4 und 5 gelieferten Einstellpositionen und versucht, eine Kompromißlösung zu finden, die den beiden Wünschen gerecht wird. Dies ist z.B. bei einer Abblendeinrichtung mit Lamellenstoren auch bei unterschiedlichen Wunschpositionen der Einrichtungen 4 und 5 möglich, da die Einstellposition "geschlossen" aus klimatechnischer Sicht und die Einstellposition "halboffen" aus lichttechnischer Sicht gleichzeitig durch einen entsprechenden Lamellenanstellwinkel realisiert werden können. Kann jedoch keine Kompromißlösung gefunden werden, wählt die Einrichtung 6 als endgültige Einstell-Sollposition für die Jalousie 3 diejenige Einstellposition der Einrichtungen 4 und 5 aus, die die größere Gewichtung aufweist.

Wie oben beschrieben, kann die Gewichtung der beiden von den Einrichtungen 4 und 5 gelieferten Einstellpositionen beispielsweise durch einen Benutzer eingestellt werden. Auf diese Weise ist es möglich, voreingestellte Betriebszustände für die Jalousie 3, die Innenbeleuchtung 9 und eine Heizungs-, Lüftungs- und Klimaregeleinheit 10 mit entsprechender Gewichtung für die Blend- und Klimaschutzfunktionen der einzelnen Betriebszustände abzuspeichern und abzurufen. Ein entsprechendes System für die Auswahl verschiedener voreingestellter Betriebszustände ist beispielsweise aus dem Gebrauchsmuster G 94 12 900.2 bekannt.

Vorteilhafterweise ist zumindest die Einrichtung 5 zur Bestimmung der aus klimatechnischer Sicht optimalen Einstellposition nach den Regeln der Fuzzy-Logik ausgebildet. Die Fuzzy-Logik arbeitet mit unpräzisen Aussagen. Die Eingangsgrößen der Fuzzy-Logik werden quantifiziert, d.h. es sind für jede Größe nur bestimmte Wertebereiche zugelassen. Die Quantifizierung der Größen erfolgt nach sogenannten Zugehörigkeitsfunktionen, wobei dem aktuellen Wert einer Eingangsgröße ein entsprechender Wertebereich gemäß seiner Zugehörigkeitsfunktion und ein entsprechender Wahrheitswert (Erfüllungsgrad) zugewiesen wird. Die quantifizierten Eingangsgrößen werden mit ihren Wahrheitswerten entsprechend bestimmter Entscheidungsregeln kombiniert, so daß eine - ebenfalls quantifizierte - Ausgangsgröße abgeleitet werden kann, die abschließend in eine konkrete Ausgangsgröße nach einer bestimmten Methode (Defuzzifizierung) umgewandelt wird. Die Grundprinzipien der Fuzzy-Logik sind beispielsweise in dem Bericht "Technology Profile Fuzzy Logic", Marcello Hoffmann, SRI International, Juni 1994, beschrieben. Bei der Einrichtung 5 können somit als quantifizierte Eingangsgrößen die Innen- oder Außentemperatur, die Bestrahlungsstärke des Außenlichts 2, die Kühl- oder Heizleistung einer in dem Raum 1 vorhandenen Heizungs-/Lüftungs- und Klimaregeleinheit 10 oder Wärmekoeffizienten der Jalousie 3 oder des Fensters 14 eingesetzt werden. Ebenso kann für die Steuerung die aktuelle Position der Abblendeinrichtung berücksichtigt werden. Die Ausgangsgröße der Einrichtung 5 ist nach erfolgreicher Defuzzifizierung die Einstellposition für die Jalousie 3.

Auf analoge Weise können auch die weiteren Einrichtungen 4 und 6 als Fuzzy-Regler ausgebildet sein.

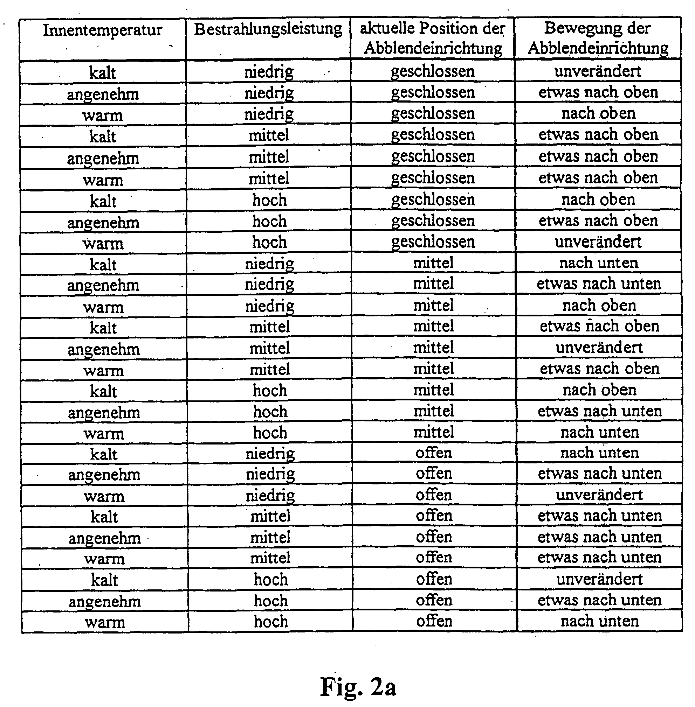

In den Figuren 2a-2c ist ein Beispiel für eine Realisierung des ersten Ausführungsbeispiels mit Hilfe der Fuzzy-Logik für die Ermittlung der aus klimatechnischer Sicht optimalen Einstellposition dargestellt. Als quantisierte Eingangsgrößen oder Eingangsvariablen werden die Innentemperatur (Wertebereich kalt, angenehm und mittel), die Bestrahlungsleistung (niedrig, mittel und hoch), die aktuelle Position der Abblendeinrichtung (geschlossen, mittel und offen), die Außentemperatur (kalt, angenehm und warm) und die Heizleistung in dem Raum (negativ, null und positiv) ausgewertet. Eine negative Heizleistung der Heizungs-/Lüftungs- und Klimaregeleinheit 10 entspricht einer Kühlung des Raums. Da fünf Eingangsvariablen ausgewertet werden, wären insgesamt $3^5 = 345$ unterschiedliche Entscheidungsregeln notwendig, da jede Eingangsvariable drei unterschiedliche Werte annehmen kann. Die Anzahl der Entscheidungsregeln wird jedoch dadurch reduziert, daß gemäß Fig. 2a und 2b jeweils drei bzw. zwei Eingangsvariablen mit unterschiedlichen Entscheidungsregeln kombiniert werden, wobei jeder Kombination der entsprechenden Eingangsvariablen ein bestimmter Wert für die Veränderung der Abblendeinrichtung (nach unten, etwas nach unten, unverändert, etwas nach oben, nach oben) zugeordnet ist. Die gemäß Fig. 2a und 2b ermittelten Ausgangsgrößen werden schließlich gemäß einer beliebig vorgebbaren Entscheidungslogik zu einem endgültigen Einstellwert für die Abblendeinrichtung kombiniert.

Die Gewichtung der somit aus klimatechnischer Sicht optimalen Einstellposition erfolgt beispielsweise anhand der quantifizierten Werte für die Bestrahlungsleistung und die Heizleistung in dem abzublendenden Raum. Wie Fig. 2c zu entnehmen ist, liegt auf diese Weise auch die Gewichtung in quantifizierter Form vor.

Es ist ersichtlich, daß bei entsprechender Erhöhung der möglichen Werte für die Eingangs- und Ausgangsgrößen sowie die Gewichtung die Präzision der Steuerung der Abblendeinrichtung beliebig erhöht werden kann.

Gemäß dem zweiten Ausführungsbeispiel wählt die Einrichtung 6 stets die von der Einrichtung 5 gelieferte aus klimatechnischer Sicht optimale Einstellposition aus, wenn sich in dem Raum 1 keine Person befindet. Ist dagegen eine Person anwesend, wählt die Einrichtung 6 die aus der Sicht der Bedienperson oder aus lichttechnischer Sicht optimale Einstellposition der Einrichtung 4 aus, da in erster Linie Blendfreiheit in dem Raum gewährleistet sein bzw. dem Wunsch der Bedienperson entsprochen werden muß. Kann jedoch unabhängig von der Position der Jalousie 3 in dem Raum 1 blendfreies Arbeiten ermöglicht werden, z.B. bei stark bedecktem Himmel oder entsprechender Anordnung der Bildschirmarbeitsplätze, so bestimmt die Einrichtung 6 als endgültige Einstell-Sollposition für die Jalousie 3 eine Einstellposition, die hinsichtlich der künstlichen Innenbeleuchtung und der notwendigen Beheizung/Kühlung des Raums 1 den geringsten Energieaufwand erfordert. Diese Einstellposition entspricht somit in der Regel der von der Einrichtung 5 gelieferten Einstellposition. Die An- bzw. Abwesenheit einer Person kann durch einen Bewegungssensor 12 erfaßt werden, der der Einrichtung 6 ein entsprechendes Signal i zuführt.

Ebenso können auch bei diesem Ausführungsbeispiel die ermittelten Einstellpositionen gewichtet werden, wobei bei Anwesenheit einer Person in dem Raum die höhergewichtete Einstellposition ausgewählt wird. Ist keine Person in dem Raum anwesend, wird - wie oben beschrieben - die aus klimatechnischer Sicht optimale Einstellposition ausgewählt.

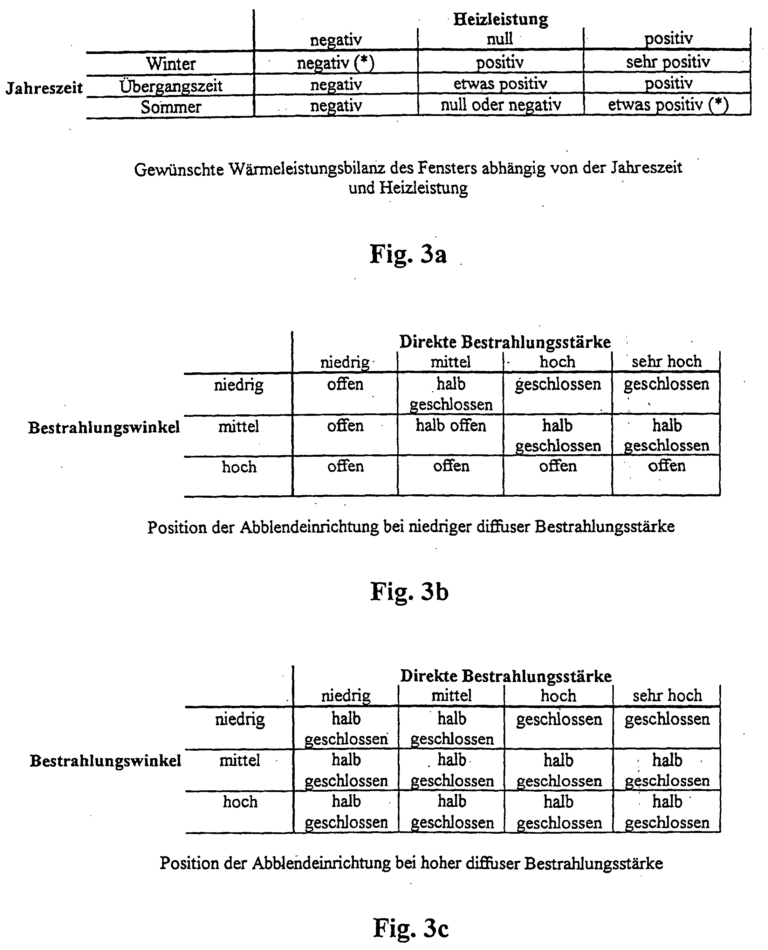

In Fig. 3a ist ein Beispiel für die Realisierung des zweiten Ausführungsbeispiels mit Hilfe der Fuzzy-Logik zur Ermittlung der aus klimatechnischer Sicht optimalen Einstellposition angegeben. Die aus klimatechnischer Sicht gewünschte Einstellposition der Abblendeinrichtung 3 wird dabei gemäß der angestrebten Wärmebilanz des entsprechenden Fensters 14 ermittelt. Für die Wärmeleistungsbilanz $P_F$ des Fensters 14 gilt folgende Formel:

$$P_F = P_{F1} + P_{F2} - P_V.$$

Dabei entspricht $P_{F1}$ der Wärmeleistungssteigerung durch die Bestrahlung des nicht abgeblendeten Bereichs des Fensters 14, $P_{F2}$ der Wärmeleistungssteigerung durch Bestrahlung des abgeblendeten Bereichs des Fensters 14 und $P_V$ dem Wärmeleistungsverlust von dem Raum 1 nach außen durch das Fenster 14 und die Abblendeinrichtung 3. Die Wärmeleistungsbilanz $P_F$ des Fensters ist die Haupt-Ausgangsvariable der Einrichtung 5, wobei die aus klimatechnischer Sicht optimale Einstellposition für die Jalousie 3 aus dem ermittelten Wärmeleistungsbilanzwert abgeleitet wird. Diese Vorgehensweise erlaubt eine Reduzierung der benötigten Fuzzygrößen und beschränkt sich auf das Wesentliche. Dabei wird der angestrebte Wärmeleistungsbilanzwert ermittelt und anschließend diejenige Einstellposition ausgewählt, die dem Wärmeleistungsbilanzwert des Fensters am gerechtesten wird. Der Wärmeleistungsbilanzwert wird wiederum anhand bestimmter Eingangsgrößen mit Hilfe von Fuzzy-Entscheidungsregeln ermittelt, wobei die Entscheidungsregeln derart ausgelegt sind, daß durch die daraus resultierende Einstellposition der Abblendeinrichtung die Heizungs-/Lüftungs- und Klimaregeleinheit 10 unterstützt wird, d.h. die Abblendeinrichtung soll das Aufwärmen des Raums 1 bei Beheizen durch die Heizungs-/Lüftungs- und Klimaregeleinheit 10 erleichtern bzw. dessen Abkühlen, wenn der Raum 1 gekühlt wird. Vorteilhafterweise erfolgt die Ermittlung des angestrebten Wärmeleistungsbilanzwertes jahreszeitabhängig.

Als Eingangsvariablen für die Ermittlung des Wärmeleistungsbilanzwertes werden somit in quantisierter Form die Jahreszeit (Wertebereich Winter, Übergangszeit und Sommer) und die Heizleistung (negativ, null oder positiv) verwendet. Wie aus Fig. 3a ersichtlich, wird jeder Kombination dieser Eingangsvariablen ein bestimmter quantisierter und gewünschter Wärmeleistungsbilanzwert (Wertebereich negativ, null, etwas positiv, positiv und sehr positiv) zugeordnet. Eine negative Wärmeleistungsbilanz bedeutet dabei einen angestrebten Wärmeübergang von dem Rauminneren durch das Fenster nach außen. Die mit (*) gekennzeichneten Fälle sollten allerdings für eine gute Klimaregelung in der Praxis nicht auftreten. Die heizleistungsabhängige Ermittlung des Wärmeleistungsbilanzwertes weist den Vorteil auf, daß stets eine der Betriebsweise der Heizungs-/Lüftungs- und Klimaregeleinheit 10 entgegenwirkende Stellung der Abblendeinrichtung 3 ausgeschlossen ist. Die derart ausgestaltete Steuerschaltung 7 kann zudem mit jeder beliebigen Heizungs-/Lüftungs- und Klimaregeleinheit 10 gekoppelt werden. Die Jahreszeit kann durch Mittelwertbildung der Außentemperatur über einen längeren Zeitraum ermittelt werden.

Die aus klimatechnischer Sicht optimale Einstellposition für die Abblendeinrichtung 3 ist diejenige Einstellposition, die dem gewünschten Wärmeleistungsbilanzwert des Fensters 14 entspricht. Zu diesem Zweck wird die Einstellposition aus der obigen Formel abgeleitet. Kann der angestrebte Wärmeleistungsbilanzwert durch keine Einstellposition erreicht werden, so wird als Einstellposition diejenige Stellung gewählt, die dem gewünschten Wärmeleistungsbilanzwert am gerechtesten wird.

In Fig. 3b und 3c ist ein Beispiel für die Realisierung des zweiten Ausführungsbeispiels mit Hilfe der Fuzzy-Logik zur Ermittlung der aus lichttechnischer Sicht optimalen Einstellposition angegeben. Als quantifizierte Eingangsvariablen werden der Bestrahlungswinkel des Außenlichts 2 zu dem Fenster 14 sowie die direkte Bestrahlungsstärke des senkrecht einfallenden Lichts verwendet. Jeder Kombination dieser Eingangsvariablen wird mit Hilfe von den angegebenen Entscheidungsregeln ein bestimmter Wert für die Einstellposition der Abblendeinrichtung 3 zugewiesen. Dabei wird in Fig. 3b und 3c zwischen den Fällen einer niedrigen und hohen diffusen Lichteinstrahlung unterschieden. Die in Fig. 3b und 3c angewendeten Entscheidungsregeln orientieren sich an den folgenden Aspekten: zur Vermeidung von Blendeffekten soll eine direkte Sonneneinstrahlung verhindert werden. Trotzdem soll für die Beleuchtung des Raumes ein möglichst hoher Anteil des Außenlichts 2 verwendet werden und die Anzahl der Bewegungen der Abblendeinrichtung 3 soll möglichst gering sein.

Analog zu dem ersten Ausführungsbeispiel wird durch die Einrichtung 6 die abschließende Soll-Einstellposition für die Abblendeinrichtung aus den gemäß Fig. 3a bzw. Fig. 3b, c ermittelten Einstellpositionen ausgewählt. Die Auswahl erfolgt wie oben beschrieben. Bei Anwesenheit einer Person in dem Raum wird die aus lichttechnischer Sicht optimale Einstellposition ausgewählt, während die aus klimatechnischer Sicht optimale Einstellposition ausgewählt wird, wenn keine Person in dem Raum anwesend ist.

Mit der Einrichtung 6 bzw. der Steuerschaltung 7 kann eine Steuerschaltung 8 zum Einstellen der Innenbeleuchtung 9 abhängig von der durch die Einrichtung 6 bestimmten Einstell-Sollposition für die Jalousie 3 verbunden sein, so daß das Kunstlicht stets in Übereinstimmung mit dem in den Raum 1 einfallenden Außenlicht eingestellt werden kann. Ist die die Einrichtung 6 bzw. die Steuerschaltung 7 mit der Heizungs-/Lüftungs- und Klimaregeleinheit 10 verbunden, so kann die Stellung der Jalousie 3 in die Heizungs- oder Kühlungsleistung einbezogen oder Soll-Temperaturwerte für die Innentemperatur vorgeben werden.

Besonders vorteilhaft ist die Anbindung der erfindungsgemäßen Steuerschaltung 7 an ein (nicht gezeigtes) Gebäudeleittechnik-System, so daß auch gebäudeweite Daten bzw. Entscheidungsparameter g, h, die im wesentlichen nicht von dem Außenlicht 2 abhängig sind, für die Bestimmung der Einstell-Sollposition für die Jalousie 3 durch die Einrichtung 6 berücksicht werden können. So kann beispielsweise gebäudeweit die Betriebszeit für die Benutzung der Jalousie 3 vorgegeben sein oder der Einrichtung 6 mitgeteilt werden, daß unabhängig von den Wunschpositionen der Einrichtungen 4 und 5 die Jalousie in der Nacht aus Sicherheitsgründen stets geschlossen oder bei Sturm stets geöffnet werden soll.

## Patentansprüche

1. Verfahren zur Steuerung einer Abblendeinrichtung (3) zum Abblenden eines einen Raum (1) von außen beleuchtenden Außenlichts (2), umfassend die Schritte

> a) Ermitteln einer ersten Einstellposition für die Abblendeinrichtung (3) abhängig von ersten Parametern (a, b, c),
> b) Ermitteln einer zweiten Einstellposition für die Abblendeinrichtung (3) abhängig von klimatechnischen zweiten Parametern (d, e, f), so daß in dem Raum (1) eine bestimmte Innentemperatur erzielt wird,
> c) Bestimmen der tatsächlichen Einstell-Sollposition für die Abblendeinrichtung (3) abhängig von der ersten und zweiten Einstellposition anhand vorgegebener Entscheidungsparameter, und
> d) Einstellen der Abblendeinrichtung (3) auf die Einstell-Sollposition,

> > wobei in Schritt c) als die Einstell-Sollposition für die Abblendeinrichtung (3) die in Schritt a) ermittelte erste Einstellposition bestimmt wird, wenn sich in dem Raum (1) eine Person befindet, und
> > in Schritt c) als die Einstell-Sollposition für die Abblendeinrichtung (3) die in Schritt b) ermittelte zweite Einstellposition bestimmt wird, wenn sich in dem Raum (1) keine Person befindet.

2. Verfahren nach Anspruch 1,
   **dadurch gekennzeichnet,**

   > **daß** die ersten Parameter (a, b, c) lichttechnische Parameter umfassen, und
   > **daß** die erste Einstellposition für die Abblendeinrichtung (3) derart ermittelt wird, daß einerseits in dem Raum (1) eine Blendung durch das Außenlicht (2) vermieden und andererseits das Außenlicht (2) zur Beleuchtung des Raums (1) bestmöglich ausgenützt wird.

3. Verfahren nach Anspruch 1 oder 2,
   **dadurch gekennzeichnet,**
   **daß** die ersten Parameter (a, b, c) von einer Bedienperson vorgegebene Paramter, insbesondere eine vorgegebene Einstellposition für die Abblendeinrichtung (3), umfassen.

4. Verfahren nach Anspruch 3,
   **dadurch gekennzeichnet,**
   **daß** die von der Bedienperson vorgegebenen Parameter aus einem Speicher abgerufen werden.

5. Verfahren nach einem der vorhergehenden Ansprüche,
   **dadurch gekennzeichnet,**

daß die erste Einstellposition in Abhängigkeit von einem der folgenden ersten Parameter (a, b, c) oder einer Kombination derselben ermittelt wird:

> die Bestrahlungsstärke des Außenlichts (2),
> der Sonnenstand,
> der Bestrahlungswinkel des Außenlichts gegenüber einem von dem Außenlicht (2) beleuchteten Fenster (14) des Raums (1),

und **daß** die zweite Einstellposition in Abhängigkeit von einem der folgenden zweiten Parameter (d, e, f) oder einer Kombination derselben ermittelt wird:

> die Innentemperatur des Raums (1),
> die Außentemperatur,
> die Bestrahlungsstärke des Außenlichts (2),
> der Sonnenstand,
> die Heiz- bzw. Kühlleistung einer Heizungs- und/oder Lüftungs- und/oder Klimaregeleinheit (10) des Raumes (1),
> die aktuelle Position der Abblendeinrichtung,
> die Jahreszeit.

6. Verfahren nach einem der vorhergehenden Ansprüche,
   **dadurch gekennzeichnet,**
   **daß** die zweite Einstellposition anhand der klimatechnischen zweiten Parameter (d, e, f) derart ermittelt wird, daß die Abblendeinrichutng (3) in der zweiten Einstellposition die Heizungs- bzw. Kühlungsfunktion einer Heizungs- und/oder Lüftungs- und/oder Klimaregeleinheit (10) des Raumes (1) unterstützt.

7. Verfahren nach Anspruch 6,
   **dadurch gekennzeichnet,**

   > **daß** ausgehend von der Heizungs- bzw. Kühlungsleistung der Heizungs- und/oder Lüftungs- und/oder Klimaregeleinheit (10) des Raumes (1) ein Soll-Wärmeleistungsbilanzwert für den Wärmeübergang eines von der Abblendeinrichtung (3) abzublendenden Fensters (14) des Raumes (1) ermittelt wird, und
   > **daß** die zweite Einstellposition aus dem Soll-Wärmeleistungsbilanzwert abgeleitet wird.

8. Verfahren nach einem der vorhergehenden Ansprüche,
   **dadurch gekennzeichnet,**
   **daß** die Abblendeinrichtung (3) eine Jalousie ist.

**9.** Verfahren nach einem der vorhergehenden Ansprüche,

**dadurch gekennzeichnet,**

**daß** abhängig von der in Schritt c) bestimmten Einstell-Sollposition eine Innenbeleuchtung (9) des Raums (1) gesteuert wird.

**10.** Verfahren nach Anspruch 1,

**dadurch gekennzeichnet,**

**daß** in Schritt c) als die Einstell-Sollposition für die Abblendeinrichtung (3) die erste Einstellposition bestimmt wird, wenn in dem Raum (1) unabhängig von der Position der Abblendeinrichtung (3) keine Blendung durch das Außenlicht (2) auftreten kann.

**11.** Verfahren nach einem der vorhergehenden Ansprüche,

**dadurch gekennzeichnet,**

**daß** mindestens der Schritt b) gemäß den Regeln der Fuzzy-Logik durchgeführt wird.

**12.** Vorrichtung zur Steuerung einer Abblendeinrichtung (3) zum Abblenden eines einen Raum (1) von außen beleuchtenden Außenlichts (2),

mit einer Einrichtung (4) zum Ermitteln einer ersten Einstellposition für die Abblendeinrichtung (3) abhängig von ersten Parametern (a, b, c),
mit einer Einrichtung (5) zum Ermitteln einer zweiten Einstellposition für die Abblendeinrichtung (3) abhängig von klimatechnischen zweiten Parametern (d, e, f), so daß in dem Raum (1) eine bestimmte Innentemperatur erzielbar ist,
mit einer Einrichtung (6) zum Bestimmen einer tatsächlichen Einstell-Sollposition für die Abblendeinrichtung (3) abhängig von der ersten und zweiten Einstellposition anhand vorgegebener Entscheidungsparameter, und
mit einem Stellglied (13) zum Einstellen der Abblendeinrichtung (3) auf die Einstell-Sollposition,

wobei die Einrichtung (6) zum Bestimmen der Einstell-Sollposition als die Einstell-Sollposition für die Abblendeinrichtung (3) die erste Einstellposition auswählt, wenn sich in dem Raum (1) eine Person befindet, und
die Einrichtung (6) zum Bestimmen der Einstell-Sollposition als die Einstell-Sollposition für die Abblendeinrichtung (3) die zweite Einstellposition auswählt, wenn sich in dem Raum (1) keine Person befindet.

**13.** Vorrichtung nach Anspruch 12,

**dadurch gekennzeichnet,**

**daß** die ersten Parameter (a, b, c) lichttechnische Parameter umfassen, und

**daß** die Einrichtung (4) zum Ermitteln der ersten Einstellposition die erste Einstellposition für die Abblendeinrichtung (3) derart ermittelt, daß einerseits in dem Raum (1) eine Blendung durch das Außenlicht (2) vermieden und andererseits das Außenlicht (2) zur Beleuchtung des Raums (1) bestmöglich ausgenützt wird.

**14.** Vorrichtung nach Anspruch 12 oder 13,

**dadurch gekennzeichnet,**

**daß** die ersten Parameter (a, b, c) von einer Bedienperson vorgegebbare Parameter, insbesondere eine vorgegebene Einstellposition für die Abblendeinrichtung (3), umfassen.

**15.** Vorrichtung nach Anspruch 14,

**gekennzeichnet durch,**

einen Speicher, in dem die von der Bedienperson vorgegebenen Parameter gespeichert sind.

**16.** Vorrichtung nach einem der Ansprüche 12 bis 15,

**dadurch gekennzeichnet,**

**daß** die Einrichtung (4) zum Ermitteln der ersten Einstellposition diese erste Einstellposition in Abhängigkeit von einem der folgenden ersten Parameter (a, b, c) oder einer Kombination derselben ermittelt:

die Bestrahlungsstärke des Außenlichts (2),
der Sonnenstand,
der Bestrahlungswinkel des Außenlichts gegenüber einem von dem Außenlicht (2) beleuchteten Fenster (14) des Raums (1),

und **daß** die Einrichtung (5) zum Ermitteln der zweiten Einstellposition diese zweite Einstellposition in Abhängigkeit von einem der folgenden ersten Parameter (d, e, f) oder einer Kombination derselben ermittelt:

die Innentemperatur des Raums (1),
die Außentemperatur,
die Bestrahlungsstärke des Außenlichts (2),
der Sonnenstand,
die Heiz- bzw. Kühlleistung einer Heizungs- und/oder Lüftungs- und/oder Klimaregeleinheit (10) des Raumes (1),
die aktuelle Position der Abblendeinrichtung,
die Jahreszeit.

**17.** Vorrichtung nach einem der Ansprüche 12 bis 16,

**gekennzeichnet durch**

> eine Erfassungseinrichtung (15) zum Erfassen der Beleuchtungsstärke des einfallenden Außenlichts (2), und
> eine Erfassungseinrichtung (11) zum Erfassen der Außen- und/oder Innentemperatur des Raums (1).

18. Vorrichtung nach einem der Ansprüche 12 bis 17, **dadurch gekennzeichnet,**
    **daß** die Einrichtungen (4, 5) zum Ermitteln der ersten und zweiten Einstellposition und die Einrichtung (6) zum Bestimmen der tatsächlichen Einstell-Sollposition in einer Steuerschaltung (7) integriert sind.

19. Vorrichtung nach einem der Ansprüche 12 bis 18, **dadurch gekennzeichnet,**
    **daß** die Einrichtung (6) zum Bestimmen der Einstell-Sollposition mit einer Steuerschaltung (8) zum Einstellen der Innenbeleuchtung (9) des Raums (1) abhängig von der bestimmten Einstell-Sollposition verbunden ist.

20. Vorrichtung nach einem der Ansprüche 12 bis 19, **dadurch gekennzeichnet,**
    **daß** die Einrichtung zum Bestimmen der Einstell-Sollposition mit einer Heizungs-und/oder Lüftungs-und/oder Klimaregeleinheit (10) zum Einstellen der Beheizung und/oder Belüftung und/oder Klimaregelung des Raums (1) abhängig von der bestimmten Einstell-Sollposition verbunden ist.

21. Vorrichtung nach Anspruch 20, **dadurch gekennzeichnet,**

    > **daß** die Einrichtung (5) zum Ermitteln der zweiten Einstellposition anhand der klimatechnischen zweiten Parameter (d, e, f) die zweite Einstellposition derart ermittelt,
    > **daß** die Abblendeinrichtung (3) in der zweiten Einstellposition die Heizungs- bzw. Kühlungsfunktion der Heizungs- und/oder Lüftungs- und/oder Klimaregeleinheit (10) des Raumes (1) unterstützt.

22. Vorrichtung nach Anspruch 12, **dadurch gekennzeichnet,**
    **daß** die Einrichtung (6) zum Bestimmen der Einstell-Sollposition als die Einstell-Sollposition für die Abblendeinrichtung (3) die zweite Einstellposition auswählt, wenn in dem Raum (1) unabhängig von der Position der Abblendeinrichtung (3) keine Blendung durch das Außenlicht (2) auftreten kann.

23. Vorrichtung nach Anspruch 12 oder 22, **dadurch gekennzeichnet,**
    **daß** ein Bewegungssensor (12) die Anwesenheit einer Person in dem Raum (1) überwacht.

24. Vorrichtung nach einem der Ansprüche 12 bis 23, **dadurch gekennzeichnet,**
    **daß** mindestens die Einrichtung zum Ermitteln der zweiten Einstellposition als Fuzzy-Logik-Regler ausgebildet ist.

**Claims**

1. Method of controlling a screening device (3) for screening exterior light illuminating a room (1) from the outside, including the steps

   > a) determining a first setting position for the screening device (3) in dependence upon first parameters (a, b, c),
   > b) determining a second setting position for the screening device (3), in dependence upon second parameters (d, e, f) relating to climate factors, so that a particular interior temperature is attained in the room (1),
   > c) establishing the actual set desired position for the screening device (3) in dependence upon the first and second setting positions, on the basis of predetermined decision parameters, and
   > d) setting the screening device (3) to the set desired position,

   whereby in step c) there is established as the set desired position for the screening device (3) the first setting position determined in step a) when a person is present in the room (1), and in step c) there is established as the set desired position for the screening device (3) the second setting position determined in step b) when no person is present in the room (1).

2. Method according to claim 1, **characterized in that**,

   > the first parameters (a, b, c) include parameters relating to lighting factors, and
   > **in that** the first setting position for the screening device (3) is so determined that on the one hand there is avoided in the room (1) a dazzling by the exterior light (2) and on the other hand the exterior light (2) is exploited as fully as possible for the illumination of the room (1).

3. Method according to claim 1 or 2, **characterized in that**,
   the first parameters (a, b, c) include parameters determined by an operating person, in particular a predetermined setting position for the screening device (3).

4.  Method according to claim 3,
    **characterized in that**,
    the parameters predetermined by an operating person are called up from a memory.

5.  Method according to any preceding claim,
    **characterized in that**,

    the first setting position is determined in dependence upon one of the following first parameters (a, b, c) or upon a combination thereof:

    the intensity of the exterior light (2),
    the position of the sun,
    the angle of incidence of the exterior light with
    regard to a window (14) of the room (1) illuminated by the exterior light (2),

    and **in that** the second setting position is determined in dependence upon one of the following second parameters (d, e, f) or upon a combination thereof:

    the interior temperature of the room (1),
    the exterior temperature,
    the intensity of the exterior light (2),
    the position of the sun,
    the heating or cooling power of a heating and/or ventilation and/or climate control unit (10) of the room (1),
    the actual position of the screening device,
    the season of the year.

6.  Method according to any preceding claim,
    **characterized in that**,
    the second setting position is so determined on the basis of the second parameters (d, e, f) relating to climate factors that the screening device (3) in the second setting position supports the heating or cooling function of a heating and/or ventilation and/or climate control unit (10) of the room (1).

7.  Method according to claim 6,
    **characterized in that**,

    starting from the heating or cooling power of the heating and/or ventilation and/or climate control unit (10) of the room (1) there is determined a desired thermal power balance value for the thermal transfer of a window (14) of the room (1) to be screened by the screening device (3), and
    **in that** the second setting position is derived from the desired thermal power balance value.

8.  Method according to any preceding claim,
    **characterized in that**,
    the screening device (3) is a blind.

9.  Method according to any preceding claim,
    **characterized in that**,
    dependent upon the setting desired position determined in step c), interior lighting (9) of the room (1) is controlled.

10. Method according to claim 1,
    **characterized in that**,
    in step c) there is established as the set desired position for the screening device (3) the first setting position when, in the room (1), independent of the position of the screening device (3), dazzling by the exterior light (2) cannot arise.

11. Method according to any preceding claim,
    **characterized in that**,
    at least step b) is carried out in accordance with the rules of fuzzy logic.

12. Apparatus for controlling a screening device (3) for screening exterior light (2) illuminating a room from the outside,

    having a device (4) for determining a first setting position for the screening device (3) in dependence upon first parameters (a, b, c),
    having a device (5) for determining a second setting position for the screening device (3) in dependence upon second parameters (d, e, f) relating to climate factors, so that a particular interior temperature can be attained in the room (1),
    having a device (6) for establishing an actual set desired position for the screening device (3) in dependence upon the first and second setting positions on the basis of predetermined decision parameters, and
    having a setting member (13) for setting the screening device (3) to the set desired position, whereby the device (6) for establishing the set desired position as the set desired position for the screening device (3) selects the first setting position when a person is present in the room (1), and the device (6) for establishing the set desired position as the set desired position for the screening device (3) selects the second setting position when no person is present in the room (1).

13. Device according to claim 12,
    **characterized in that**,

    the first parameters (a, b, c) include parameters relating to lighting factors and

**in that** the device (4) for determining the first setting position determines the first setting position for the screening device (3) in such a manner that on the one hand dazzling by the exterior light (2) is avoided in the room (1) and on the other hand the exterior light (2) is exploited as far as possible for the illumination of the room (1).

14. Device according to claim 12 or 13, **characterized in that**, the first parameters (a, b, c) include parameters which can be predetermined by an operating person, in particular a predetermined setting position for the screening device (3).

15. Device according to claim 14, **characterized by**, a memory in which the parameters predetermined by the operating person are stored.

16. Device according to any of claims 12 to 15, **characterized in that**,

the device (4) for determining the first setting position determines this first setting position in dependence upon one of the following first parameters (a, b, c) or upon a combination thereof:

the intensity of the exterior light (2), the position of the sun, the angle of incidence of the exterior light with regard to a window (14) of the room (1) illuminated by the exterior light (2),

and **in that** the device (5) for determining the second setting position determines this second setting position in dependence upon one of the following second parameters (d, e, f) or upon a combination thereof:

the interior temperature of the room (1), the exterior temperature, the intensity of the exterior light (2), the position of the sun, the heating or cooling power of a heating and/or ventilation and/or climate control unit (10) of the room (1), the actual position of the screening device, the season of the year.

17. Device according to any of claims 12 to 16, **characterized by**,

a detection device (15) for detecting the illumination intensity of the incident exterior light (2), and a detection device (11) for detecting the exterior and/or interior temperature of the room (1).

18. Device according to any of claims 12 to 17, **characterized in that**, the devices (4, 5) for determining the first and second setting positions and the device (6) for establishing the actual set desired position are integrated in a control circuit (7).

19. Device according to any of claims 12 to 18, **characterized in that**, the device (6) for determining the set desired position is connected with a control circuit (8) for setting the interior illumination (9) of the room (1) in dependence upon the particular set desired position.

20. Device according to any of claims 12 to 19, **characterized in that**, the device for establishing the set desired position is connected with a heating and/or ventilation and/or climate control unit (10) for setting the heating and/or ventilation and/or climate control of the room (1) in dependence upon the particular set desired position.

21. Device according to claim 20, **characterized in that**, the device (5) for determining the second setting position on the basis of the second parameters (d, e, f) relating to climate factors determines the second setting position is such a manner that the screening device (3), in the second setting position, supports the heating or cooling function of the heating and/or ventilation and/or climate control unit (10) of the room (1).

22. Device according to claim 12, **characterized in that**, the device (6) for establishing the set desired position as the set desired position for the screening device (3) selects the second setting position when, in the room (1), independent of the position of the screening device (3), no dazzling by the exterior light (2) can arise.

23. Device according to claim 12 or 22, **characterized in that**, a movement sensor (12) monitors for the presence of a person in the room (1).

24. Device according to any of claims 12 to 23, **characterized in that**, at least the device for determining the second setting position is formed as a fuzzy logic controller.

## Revendications

1. Procédé pour la commande d'un dispositif anti-aveuglement (3) pour masquer ou tamiser une lumière extérieure (2) éclairant une pièce (1) depuis l'extérieur, comprenant les étapes consistant à :

   a) déterminer une première position de réglage pour le dispositif anti-aveuglement (3) en fonction des premiers paramètres (a, b, c),
   b) déterminer une seconde position de réglage pour le dispositif aveuglement (3) en fonction de seconds paramètres de climatisation (d, e, f) de façon à obtenir une certaine température intérieure dans la pièce (1),
   c) définir une position nominale de réglage réel pour le dispositif anti-aveuglement (3) en fonction de la première et de la seconde position sur la base de paramètres de décision préétablis, et
   d) régler le dispositif anti-aveuglement (3) sur la position nominale de réglage,

   moyennant quoi il est défini à l'étape c) en tant que position nominale de réglage pour le dispositif anti-aveuglement (3) la première position de réglage définie à l'étape a) lorsqu'une personne se trouve dans la pièce (1), et la position nominale de réglage à l'étape c) pour le dispositif aveuglement (3), il est défini une seconde position de réglage déterminée à l'étape b) lorsqu'aucune personne ne se trouve dans la pièce (1).

2. Procédé selon la revendication 1,
   **caractérisé en ce que**

   les premiers paramètres (a, b, c) comprennent des paramètres relatifs à la lumière,
   et **en ce que**
   la première position de réglage pour le dispositif anti-aveuglement (3) est déterminée de telle sorte que, d'une part, on évite dans la pièce (1) un aveuglement par la lumière extérieure (2) et, d'autre part, on utilise le mieux possible la lumière extérieure (2) pour l'éclairage de la pièce (1).

3. Dispositif selon la revendication 1 ou 2,
   **caractérisé en ce que**
   les premiers paramètres (a, b, c) comprennent des paramètres prédéfinis par un opérateur, en particulier une position de réglage prédéfinie pour le dispositif anti-aveuglement (3).

4. Procédé selon la revendication 3,
   **caractérisé en ce que**
   les paramètres prédéfinis par l'opérateur sont extraits d'une mémoire.

5. Procédé selon l'une des revendications précédentes,
   **caractérisé en ce que**

   le premier paramètre de réglage est déterminé en fonction de l'un des premiers paramètres suivants (a, b, c) ou d'une combinaison de ceux-ci :

   l'intensité de rayonnement de la lumière extérieure (2),
   la position du soleil,
   l'angle de rayonnement de la lumière extérieure par rapport à une fenêtre (14) éclairée par la lumière extérieure (2) de la pièce (1),

   et **en ce que** la deuxième position de réglage est déterminée en fonction de l'un des seconds paramètres suivants (d, e, f) ou une combinaison de ceux-ci :

   la température intérieure de la pièce (1),
   la température extérieure,
   l'intensité de rayonnement de la lumière extérieure (2),
   la position du soleil,
   la capacité de chauffage ou de refroidissement d'un appareil de climatisation et/ou de ventilation et/ou de chauffage (10) de la pièce (1),
   la position actuelle du dispositif anti-aveuglement,
   la saison.

6. Dispositif selon l'une des revendications précédentes,
   **caractérisé en ce que**
   la deuxième position de réglage est déterminée sur la base des deuxièmes paramètres de climatisation (d, e, f), **en ce que** le dispositif anti-aveuglement (3) dans la seconde position de réglage assiste la fonction de chauffage ou de refroidissement d'un appareil de chauffage et/ou de ventilation et/ou de climatisation (10) de la pièce (1).

7. Procédé selon la revendication 6,
   **caractérisé en ce que**

   en partant de la capacité de chauffage ou de refroidissement de l'appareil de chauffage et/ou de ventilation et/ou de climatisation (10) de la pièce (1), on détermine une valeur de bilan de capacité thermique nominale pour la transition thermique d'une fenêtre (14) à masquer par le dispositif anti-aveuglement (3) de la pièce (1), et
   **en ce que** la seconde position de réglage est dérivée de la valeur de bilan de capacité thermique nominale.

8. Procédé selon l'une des revendications précédentes,

   **caractérisé en ce que**

   le dispositif anti-aveuglement (3) est une jalousie.

9. Dispositif selon l'une des revendications précédentes,

   **caractérisé en ce que**

   en fonction de la position de réglage déterminée à l'étape c), on commande un éclairage intérieur (9) de la pièce (1).

10. Dispositif selon la revendication 1,

    **caractérisé en ce que**

    à l'étape c) en tant que position nominale de réglage pour le dispositif anti-aveuglement (3), on détermine la première position de réglage lorsque, dans la pièce (1), indépendamment de la position du dispositif anti-aveuglement (3), aucun aveuglement ne peut se produire par la lumière extérieure (2).

11. Dispositif selon l'une des revendications précédentes,

    **caractérisé en ce que**

    au moins l'étape b) est réalisée selon les règles de la logique de Fuzzy.

12. Dispositif pour la commande d'un dispositif anti-aveuglement (3) pour masquer une lumière extérieure (2) éclairant une pièce (1) depuis l'extérieur,

    avec un dispositif (4) pour déterminer une première position de réglage pour le dispositif anti-aveuglement (3) en fonction de premiers paramètres (a, b, c),

    avec un dispositif (5) pour déterminer une seconde position de réglage pour le dispositif anti-aveuglement (3) en fonction de deuxièmes paramètres de climatisation (d, e, f), de sorte que dans la pièce (1) on peut obtenir une température intérieure déterminée,

    avec un dispositif (6) pour déterminer une position nominale de réglage réelle pour le dispositif anti-aveuglement (3) en fonction de la première et seconde positions de réglage sur la base de paramètres de décision prédéfinis, et

    avec un élément de réglage (13) pour régler le dispositif anti-aveuglement (3) sur la position nominale de réglage,

    moyennant quoi le dispositif (6) pour déterminer la position de réglage en tant que position nominale de réglage pour le dispositif anti-aveuglement (3) choisit la première position de réglage lorsqu'aucune personne ne se trouve dans la pièce (1), et

le dispositif (6) pour déterminer la position nominale de réglage en tant que position nominale de réglage pour le dispositif anti-aveuglement (3) choisit la seconde position de réglage lorsqu'aucune personne ne se trouve dans la pièce (1).

13. Dispositif selon la revendication 12,

    **caractérisé en ce que**

    les premiers paramètres (a, b, c) comprennent des paramètres liés à la lumière et **en ce que** le dispositif (4) pour déterminer la première position de réglage détermine la première position de réglage pour le dispositif anti-aveuglement (3) de telle sorte que, d'une part, dans la pièce on évite un aveuglement par la lumière extérieure (2) et, d'autre part, la lumière extérieure (2) est utilisée le mieux possible pour l'éclairage de la pièce (1).

14. Dispositif selon la revendication 12 ou 13,

    **caractérisé en ce que**

    les premiers paramètres (a, b, c) peuvent être prédéfinis par un opérateur, comprennent en particulier une position de réglage prédéfinie pour le dispositif anti-aveuglement (3).

15. Dispositif selon la revendication 14,

    **caractérisé par**

    une mémoire dans laquelle on stocke les paramètres prédéfinis par l'opérateur.

16. Dispositif selon l'une des revendications 12 à 15,

    **caractérisé en ce que**,

    le dispositif pour la détermination de la première position de réglage détermine cette première position de réglage en fonction de l'un des paramètres suivants (a,b,c) ou d'une combinaison de ceux-ci :

    l'intensité d'éclairage de la lumière extérieure (2),

    la position du soleil,

    l'angle d'éclairage de la lumière extérieure par rapport à l'une des fenêtres (14) éclairées par la lumière extérieure (2) de la pièce (1),

    et **en ce que** le dispositif (5) pour la détermination de la deuxième position de réglage détermine cette deuxième position de réglage en fonction de l'un des premiers paramètres suivants (d,e,f) ou d'une combinaison de ceux-ci:

    la température intérieure de la pièce (1),
    la température extérieure,

l'intensité d'éclairage de la lumière extérieure (2),

la position du soleil,

la capacité de chauffage ou de refroidissement d'un appareil de chauffage et/ou de ventilation et/ou de régulation de la climatisation (10) de la pièce (1),

la position actuelle du dispositif anti-aveuglement,

la saison.

**17.** Dispositif selon l'une des revendications 12 à 16,
**caractérisé par**

un dispositif de saisie (15) pour la saisie de l'intensité d'éclairage de la lumière extérieure en incidence (2), et

un dispositif de saisie (11) pour la saisie de la température extérieure et/ou intérieure de la pièce (1).

**18.** Dispositif selon l'une des revendications 12 à 17,
**caractérisé en ce que**

les dispositifs (4, 5) sont intégrés pour la détermination de la première et seconde positions de réglage et le dispositif (6) pour la détermination de la position nominale de réglage réelle dans un circuit de commande (7).

**19.** Dispositif selon l'une des revendications 12 à 18,
**caractérisé en ce que**

le dispositif (5) pour la détermination de la position de réglage est raccordé à un circuit de commande (8) pour le réglage de l'éclairage intérieur (9) de la pièce (1) en fonction de la position nominale de réglage déterminée.

**20.** Dispositif selon l'une des revendications 12 à 19,
**caractérisé en ce que**

le dispositif pour la détermination de la position nominale de réglage est raccordé à un appareil de chauffage et/ou de ventilation et/ou de climatisation (10) pour le réglage du chauffage et/ou de la ventilation et/ou de la régulation de climatisation de la pièce (1) en fonction de la position nominale de réglage déterminée.

**21.** Dispositif selon la revendication 20,
**caractérisé en ce que**

le dispositif (5) pour la détermination de la seconde position de réglage en fonction des deuxièmes paramètres de climatisation (d, e, f) détermine la position de réglage de telle sorte que le dispositif anti-aveuglement (3) dans la seconde position de réglage assiste la fonction de chauffage ou de refroidissement de l'appareil de chauffage et/ou de ventilation et/ou de climatisation (10) de la pièce (1).

**22.** Dispositif selon la revendication 12,
**caractérisé en ce que**

le dispositif (6) pour la détermination de la position nominale de réglage en tant que position nominale de réglage pour le dispositif anti-aveuglement (3) choisit la seconde position de réglage lorsqu'aucun aveuglement ne peut se produire par la lumière extérieure (2) dans la pièce (1), indépendamment de la position du dispositif anti-aveuglement (3).

**23.** Dispositif selon la revendication 12 ou 22,
**caractérisé en ce que**

un capteur de mouvement (12) surveille la présence d'une personne dans la pièce (1).

**24.** Dispositif selon l'une des revendications 12 à 23,
**caractérisé en ce que**

au moins le dispositif pour la détermination de la seconde position de réglage est conçu comme régulateur de logique Fuzzy.

Fig. 1

Einstellung der Innen-Beleuchtung — 8

Innenbeleuchtung — g

Stellglied — 13

Heizung
Klimaanlage
Lüftung
— 10

Bewegungs-Sensor — 12

Bestimmung der Abblend-Sollposition — 6

7

i

g

h

4 — Auswertung Lichttechnischer Daten

5 — Auswertung klimatechnischer Daten

a
b
c

d
e
f

14

Außen-Licht-Sensor — 15

Temperatur-Sensor — 11

2

3

1

EP 0 793 158 B1

| Innentemperatur | Bestrahlungsleistung | aktuelle Position der Abblendeinrichtung | Bewegung der Abblendeinrichtung |
|---|---|---|---|
| kalt | niedrig | geschlossen | unverändert |
| angenehm | niedrig | geschlossen | etwas nach oben |
| warm | niedrig | geschlossen | nach oben |
| kalt | mittel | geschlossen | etwas nach oben |
| angenehm | mittel | geschlossen | etwas nach oben |
| warm | mittel | geschlossen | etwas nach oben |
| kalt | hoch | geschlossen | nach oben |
| angenehm | hoch | geschlossen | etwas nach oben |
| warm | hoch | geschlossen | unverändert |
| kalt | niedrig | mittel | nach unten |
| angenehm | niedrig | mittel | etwas nach unten |
| warm | niedrig | mittel | nach oben |
| kalt | mittel | mittel | etwas nach oben |
| angenehm | mittel | mittel | unverändert |
| warm | mittel | mittel | etwas nach oben |
| kalt | hoch | mittel | nach oben |
| angenehm | hoch | mittel | etwas nach unten |
| warm | hoch | mittel | nach unten |
| kalt | niedrig | offen | nach unten |
| angenehm | niedrig | offen | etwas nach unten |
| warm | niedrig | offen | unverändert |
| kalt | mittel | offen | etwas nach unten |
| angenehm | mittel | offen | etwas nach unten |
| warm | mittel | offen | etwas nach unten |
| kalt | hoch | offen | unverändert |
| angenehm | hoch | offen | etwas nach unten |
| warm | hoch | offen | nach unten |

## Fig. 2a

| Außentemperatur | Heizleistung | Bewegung der Abblendeinrichtung |
|---|---|---|
| kalt | negativ | nach oben |
| kalt | null | unverändert |
| kalt | positiv | nach unten |
| angenehm | negativ | etwas nach oben |
| angenehm | null | unverändert |
| angenehm | positiv | etwas nach unten |
| warm | negativ | nach unten |
| warm | null | unverändert |
| warm | positiv | nach oben |

## Fig. 2b

| Bestrahlungsleistung | Heizleistung | Gewichtung |
|---|---|---|
| niedrig | negativ | wichtig |
| niedrig | null | unwichtig |
| niedrig | positiv | sehr wichtig |
| mittel | negativ | wichtig |
| mittel | null | unwichtig |
| mittel | positiv | sehr wichtig |
| hoch | negativ | sehr wichtig |
| hoch | null | wichtig |
| hoch | positiv | sehr wichtig |

## Fig. 2c

## Fig. 2d

| | | Heizleistung | | |
|---|---|---|---|---|
| | | negativ | null | positiv |
| Jahreszeit | Winter | negativ (*) | positiv | sehr positiv |
| | Übergangszeit | negativ | etwas positiv | positiv |
| | Sommer | negativ | null oder negativ | etwas positiv (*) |

Gewünschte Wärmeleistungsbilanz des Fensters abhängig von der Jahreszeit
und Heizleistung

## Fig. 3a

| | | Direkte Bestrahlungsstärke | | | |
|---|---|---|---|---|---|
| | | niedrig | mittel | hoch | sehr hoch |
| Bestrahlungswinkel | niedrig | offen | halb geschlossen | geschlossen | geschlossen |
| | mittel | offen | halb offen | halb geschlossen | halb geschlossen |
| | hoch | offen | offen | offen | offen |

Position der Abblendeinrichtung bei niedriger diffuser Bestrahlungsstärke

## Fig. 3b

| | | Direkte Bestrahlungsstärke | | | |
|---|---|---|---|---|---|
| | | niedrig | mittel | hoch | sehr hoch |
| Bestrahlungswinkel | niedrig | halb geschlossen | halb geschlossen | geschlossen | geschlossen |
| | mittel | halb geschlossen | halb geschlossen | halb geschlossen | halb geschlossen |
| | hoch | halb geschlossen | halb geschlossen | halb geschlossen | halb geschlossen |

Position der Abblendeinrichtung bei hoher diffuser Bestrahlungsstärke

## Fig. 3c